(19)

Europäisches
Patentamt
European
Patent Office
Office européen
des brevets

(11)     **EP 3 323 531 A1**

(12)                         **EUROPEAN PATENT APPLICATION**

(43) Date of publication:
**23.05.2018  Bulletin 2018/21**

(51) Int Cl.:
**B22F 3/105** (2006.01)        **C22C 1/04** (2006.01)

(21) Application number: **16199699.6**

(22) Date of filing: **18.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Ansaldo Energia IP UK Limited
London W1G 9DQ (GB)**

(72) Inventors:
• ETTER, Thomas
  5037 Muhen (CH)
• ENGELI, Roman
  8050 Zürich (CH)

(74) Representative: **Bernotti, Andrea et al
Studio Torta S.p.A.
Via Viotti, 9
10121 Torino (IT)**

(54)     **METHOD FOR MANUFACTURING A MECHANICAL COMPONENT**

(57)     A method for manufacturing a mechanical component. The method comprises the application of an additive manufacturing method, wherein the method comprises the deposition of a powder material and local melting and reso-lidification of the powder material, thereby providing a solid body. The method furthermore comprises the selective provision of a powder material in which the lattice parameter of the gamma prime phase is larger than the lattice parameter of the gamma phase at least in a part of a temperature range from equal to or larger than 0°C and equal to or lower the gamma prime solvus temperature.

Fig. 1

EP 3 323 531 A1

Fig. 2

**Description**

TECHNICAL FIELD

The present disclosure relates to a method for manufacturing a mechanical component as set forth in the claims.

BACKGROUND OF THE DISCLOSURE

It has become increasingly common to manufacture mechanical components, such as engine components, from material powders by means of additive manufacturing methods which are similar to rapid prototyping. In applying such methods, no specific tooling for a component is required. Generally, said methods are based upon depositing a material powder, for instance a metal powder, and melting and resolidifying the powder at selected locations such as to form a component with a specific geometry from the resolidified material. As is apparent, these methods allow for a great flexibility of the geometry of the component to be manufactured, and allow for instance manufacturing undercuts, manufacturing almost closed cavities, and the like. In particular, the powder is deposited layer by layer, each layer measuring for instance in the range of some tenths of a millimeter. The melting step is performed such as to locally melt the powder and the surface of a solidified solid volume beneath, such that the newly molten material is, after resolidification, substance bonded to an already manufactured solid volume. Such methods are for instance known as Selective Laser Melting (SLM) or Electron Beam Melting (EBM), while not being limited to these particular methods.

Mechanical components manufactured by a method of the above-mentioned kind exhibit largely different microstructures compared to conventionally cast or wrought components made from the same alloy. For instance, when compared to cast or wrought components, the grain structure is significantly finer due to the high cooling rate which is present during e.g. SLM or EBM processing. Moreover, when applying additive manufacturing from nickel or cobalt-based superalloys, the high cooling rates also cause a gamma prime free microstructure after the additive manufacturing process. When the manufactured article is heated up the first time to sufficiently high temperatures, the gamma prime phase starts to precipitate. It is in particular the gamma prime phase which causes the superior material properties with respect to elevated temperature strength and resistance to creep deformation.

Thus, the manufactured component commonly undergoes a heat treatment step in order to precipitate the gamma prime phase. During the gamma prime precipitation the lattice parameter changes. The size of a single lattice increases upon the phase transition. This dimensional change causes stresses in the component. In combination with high tensile stresses observed as a result of the manufacturing process at the component surface, stress levels are achieved which may result in crack initiation when heating up the component for the first time, also referred to as strain age cracking, or SAC, and related elevated scrap rates.

The teaching of EP 2 754 515 proposes to overcome this issue by adding crack resistant features to the component to be manufactured. However, in particular in sharp transition areas or areas in which notch effects are present, these design changes may not be sufficient to avoid strain age cracking. Moreover, adding the crack resistant features to some extent reduces the degree of freedom of design.

According to the teaching of US 2014/0034626 multiple process steps are applied during the additive buildup of a component from a powder material. These include, for instance, control of laser power, scan velocity, hedge distance, and layer thickness of the component to be built, as well as for instance shoot peening in order to introduce compressive stresses in the surface. However, the experience of the applicant has shown that controlling the process parameters to significantly reduce the residual stresses, and applying additional process steps will significantly increase the process time, reduce the throughput of expensive tooling, reduces production efficiency, and consequently adds cost.

OUTLINE OF THE SUBJECT MATTER OF THE PRESENT DISCLOSURE

It is an object of the present disclosure to propose a method for manufacturing a mechanical component of the kind initially mentioned. In one aspect, the method shall be suitable to manufacture mechanical components with lower overall internal stresses that are thus less prone to strain age cracking. In a further aspect, the method shall be feasible without adding process time in expensive manufacturing equipment.

This is achieved by the subject matter described in claim 1.

Further effects and advantages of the disclosed subject matter, whether explicitly mentioned or not, will become apparent in view of the disclosure provided below.

Disclosed is a method for manufacturing a mechanical component, wherein the method comprises applying an additive manufacturing method. The additive manufacturing method comprises depositing a powder material and the local melting and resolidifying of the powder material, thereby providing a solid body. The method further comprises selectively providing a powder material with a lattice parameter of the gamma prime phase larger than the lattice parameter of a gamma phase, at least in a part of a temperature range from equal to or larger than 0°C and equal to or lower than the gamma prime solvus temperature.

The powder material may in particular be a nickel or cobalt based alloy in which aluminum and or titanium are alloyed, wherein the total content of aluminum and titanium is typically less than 10 weight percent.

It is noted that within the framework of the present disclosure the use of the indefinite article "a" or "an" does in no way stipulate a singularity nor does it exclude the presence of a multitude of the named member or feature. It has thus to be read in the sense of "at least one" or "one or a multitude of".

The gamma or γ phase is a solid solution with a face-centered cubic lattice structure and a random distribution of various species of atoms. The gamma prime or γ' phase may be described as a face-centered cubic lattice of the solutes, most commonly aluminum and/or titanium, wherein atoms of the base material, commonly nickel or cobalt, are arranged at the face centers of the lattice. The lattice conversion due to the gamma prime phase precipitation has an effect on the lattice dimensions, i.e. the lattice parameter changes when the gamma prime phase precipitates.

The discrepancy between the lattice parameters of the gamma phase and the gamma prime phase may be characterized by the lattice parameter misfit δ which is defined as

$$\delta = \frac{2(a_{\gamma'} - a_{\gamma})}{(a_{\gamma'} + a_{\gamma})}$$

Herein, $a_{\gamma}$ is the lattice parameter of the gamma phase, whereas $a_{\gamma'}$ is the lattice parameter of the gamma prime phase. If the lattice parameter misfit is smaller than zero, the lattice parameter of the gamma prime phase is smaller than the lattice parameter of the gamma phase. Thus, the material shrinks during gamma prime precipitation. The skilled person will readily understand that with a negative, that is, smaller than zero, lattice parameter misfit, and upon the precipitation of the gamma prime phase while heating up a component, the parts of the material microstructure shrink in which the gamma prime phase is precipitated, while neighboring sections expand in which the gamma phase persists due to the thermal expansion. The skilled person will further understand that this results in additional stresses. Thus, the powder material is chosen and selectively provided as a powder material in which the lattice parameter misfit is positive, or, in other words, the lattice parameter of the gamma prime phase is larger than the lattice parameter of the gamma phase at least in a part of a temperature range in which the precipitation of the gamma prime phase occurs or is suspected to occur.

In another aspect, a component which has been manufactured by an additive manufacturing method such as for instance, but not limited to, selective laser melting, will exhibit tensile stresses in the surface zone and compressive stresses inside the component. When the at least largely gamma prime-free component is heated up for the first time, the heat flow takes place from the surface to the center, thus resulting in a temperature gradient and accordingly a gradient in thermal expansion. This different thermal expansion results in compressive stresses in the surface zone and tensile stresses inside the component. Moreover, due to the temperature gradient during heating up, gamma prime precipitation starts at the surface, such that during heating up the component the gamma prime phase is at least temporarily present at or close to the surface, while an interior of the component still is at least largely free of gamma prime. With a negative lattice parameter misfit, that is, a volume reduction due to precipitation of the gamma prime phase, additional tensile stresses result in the surface zone, and compressive stresses inside the component. These stresses are adding to the residual stresses which are caused by the manufacturing method and may enhance the risk of strain age cracking, and consequently may enhance the scrap rate of the manufacturing process. However, if the lattice parameter misfit is larger than zero, that is, a volume increase occurs upon the gamma prime precipitation, compressive stresses are added in the surface zone and tensile stresses are added inside the component. In this case, with a lattice parameter misfit larger than zero, the stresses caused by the gamma prime precipitation counteract the residual stresses caused by the manufacturing method. The risk of strain age cracking is thus significantly reduced if not avoided, and the scrap rate of the manufacturing process is significantly reduced.

The method described above is apparently the more efficient the higher the content of the gamma prime phase in fully heat treated condition is. In certain exemplary embodiments, the powder material is selectively provided to comprise 30 Vol-% or more of gamma prime phase in a fully heat treated condition. A fully heat treated condition may in this respect be understood as a condition in which the additively manufactured component was aged at a sufficiently high temperature to achieve the maximum gamma prime precipitation for maximum mechanical properties. For instance, a component of a nickel basis alloy may be aged at least for 24 hours at 850°C. It is understood that the process parameters, in particular the aging time and the temperature, or a temperature profile, may vary dependent on the specific materials used. These parameters however are well known to the skilled person, or may otherwise be easily obtained from routine testing.

In certain instances, a powder material may be selectively provided in which the lattice parameter of the gamma prime phase is larger than the lattice parameter of the gamma phase at least in a part of a temperature range from equal to, or larger than, 0°C to equal to or lower than 1100°C. In more particular instances, a powder material may be selectively provided in which the lattice parameter of the gamma prime phase is larger than the lattice parameter of the gamma phase at least in a part of a temperature range from equal to, or larger than, 400°C to equal to, or lower than, 1100°C. In even more specific instances, the method may comprise selectively providing a powder material in which the lattice parameter of the gamma prime phase is larger than the lattice parameter of the gamma phase at least in a part of a temperature range from equal to or larger than 500°C to equal to or lower than 1000°C.

In other aspects of the present disclosure a powder material may be selectively provided in which the gamma prime phase comprises nickel and at least one of aluminum and titanium. In a more specific instance, a powder material may be selectively provided in which the gamma prime phase consists of nickel and at least one of aluminum and titanium. This phase is also referred to in the art as $Ni_3(Al, Ti)$. That is, in the face-centered cubic gamma prime lattice the corners contain aluminum and/or titanium atoms, while nickel atoms are centrically arranged in the faces.

In still other aspects of the present disclosure, a powder material may be selectively provided in which the gamma prime phase comprises cobalt and at least one of tungsten and aluminum. In a more specific instance, a powder material may be selectively provided in which the gamma prime phase consists of cobalt and at least one of tungsten and aluminum. This phase is also referred to in the art as $Co_3(W, Al)$. That is, in the face-centered cubic gamma prime lattice the corners of are provided by tungsten and/or aluminum atoms, while cobalt atoms are centrically arranged in the faces.

Y. Mishima, S. Ochiai, and T. Suzuki, "Lattice parameters of Ni($\gamma$), Ni3Al($\gamma'$) and NI3Ga($\gamma'$) solid solutions with additions of transition and B-subgroup elements", Acta Metallurgica, vol. 33, no. 6, pp. 1161-1169, Jun. 1985, discloses how the lattice parameters of the gamma and the gamma prime phase may be influenced by alloying elements. Accordingly, a skillful choice of the composition enables to provide an alloy in which the gamma prime lattice parameter is larger than the gamma lattice parameter. It is noted that in cobalt based superalloys, that is, alloys with a $Co_3(W)$ or $Co_3(Al)$ gamma prime phase, the gamma prime lattice parameter is generally larger than the gamma lattice parameter.

It is understood that the features and embodiments disclosed above may be combined with each other. It will further be appreciated that further embodiments are conceivable within the scope of the present disclosure and the claimed subject matter which are obvious and apparent to the skilled person.

BRIEF DESCRIPTION OF THE DRAWINGS

The subject matter of the present disclosure is now to be explained in more detail by means of selected exemplary embodiments shown in the accompanying drawings. The figures show

Fig. 1    the lattice parameter of a first alloy plotted versus the temperature, and
Fig. 2    the lattice parameter of a second alloy plotted versus the temperature.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

EXEMPLARY MODES OF CARRYING OUT THE TEACHING OF THE PRESENT DISCLOSURE

It is known for instance from D. Coutsouradis et al. (eds.): "Materials for Advanced Power Engineering 1994: Proceedings of a Conference held in Liège, Belgium, 3-6 October 1994, Part I", Kluwer Academic Publishers, 1994: 877-880, that, depending on the composition of alloying elements some nickel based alloys exhibit a negative lattice parameter misfit, that is, the lattice parameter of the gamma prime phase is smaller than the lattice parameter of the gamma phase, while others exhibit a positive lattice misfit, that is, the lattice parameter of the gamma prime phase is larger than the lattice parameter of the gamma phase. In other words, when the lattice parameter misfit is negative, a mechanical component built from a respective material contracts upon gamma prime precipitation. When the lattice parameter misfit is positive, a mechanical component built from a respective material expands upon gamma prime precipitation.

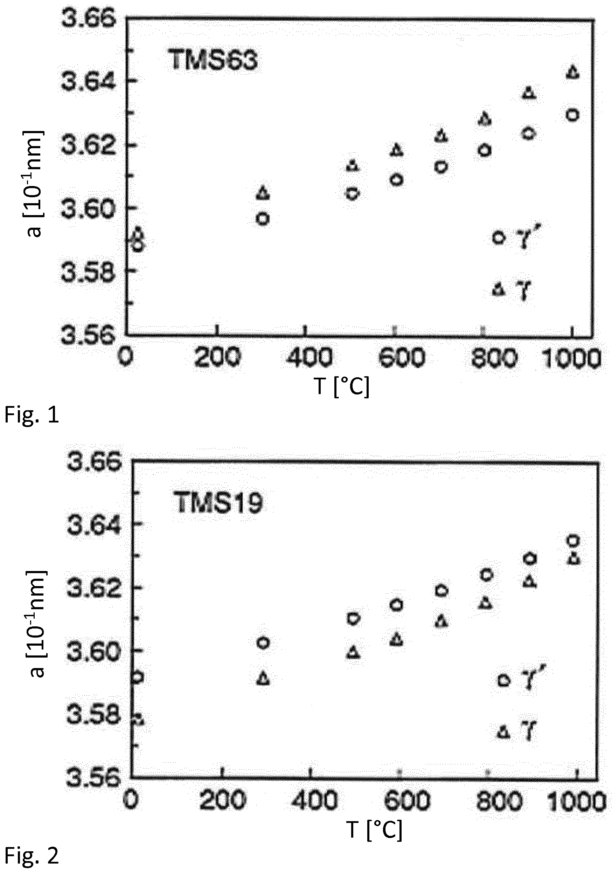

The diagrams in figures 1 and 2 illustrate the lattice parameter a versus the temperature for two exemplary nickel based alloys, referred to as TMS63 and TMS19. In figure 1, the lattice parameter of TMS63 in Angstroms, or $10^{-1}$ nm, is plotted versus the temperature in °C. As is visible, the lattice parameter of the gamma phase is larger than the lattice parameter of the gamma prime phase in the entire temperature range. The lattice parameter misfit consequently is smaller than zero in the entire temperature range. In figure 2, the lattice parameter of TMS19 in Angstroms, or $10^{-1}$ nm, is plotted versus the temperature in °C. As is visible, the lattice parameter of the gamma phase is smaller than the lattice parameter of the gamma prime phase in the entire temperature range. The lattice parameter misfit consequently is larger than zero in the entire temperature range. In essence, nickel based alloys exist in which the lattice parameter misfit is smaller than zero in a temperature range, while other nickel based alloys exist in which the lattice parameter misfit is larger than zero in the same temperature range. This characteristic can be influenced by the alloy composition.

The cited literature states that a negative lattice parameter misfit results in an improved creep rupture life. However, as was noted above, when a gamma prime phase precipitates while a component is heated up, and the lattice misfit is negative, the related contraction of the gamma prime transiting areas counteracts the general thermal expansion, and thus causes additional stresses in the component. These additional stresses may lead to the above-mentioned strain age cracking. Inventors thus conclude that in selecting an alloy for the additive manufacturing of a mechanical component in which the lattice parameter misfit is larger than zero, at least in a temperature range in which gamma prime precipitates, the risk of strain age cracking can at least be significantly reduced, and scrap rates may be significantly reduced. Contrary to the statements in literature, inventors have discovered that the use of an alloy with a positive lattice parameter misfit is largely beneficial for manufacturing a mechanical component by an additive method, in particular by an additive manufacturing method as outlined above.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

**Claims**

1. A method for manufacturing a mechanical component, the method comprising applying an additive manufacturing method, wherein the method comprises depositing a powder material and locally melting and resolidifying the powder material, thereby providing a solid body, **characterized in** selectively providing a powder material in which the lattice parameter of a gamma prime phase is larger than the lattice parameter of a gamma phase, at least in a part of a temperature range from equal to or larger than 0°C and equal to or lower than the gamma prime solvus temperature.

2. The method according to the preceding claim, **characterized in** selectively providing a powder material which comprises at least 30 Vol-% of gamma prime phase in a fully heat treated condition.

3. The method according to any of the preceding claims, **characterized in** selectively providing a powder material in which the lattice parameter of a gamma prime phase is larger than the lattice parameter of the gamma phase at least in a part of a temperature range from equal to or larger than 0°C and equal to or lower than 1100 °C.

4. The method according to any of the preceding claims, **characterized in** selectively providing a powder material in which the lattice parameter of a gamma prime phase is larger than the lattice parameter of the gamma phase at least in a part of a temperature range from equal to or larger than 400°C to equal to or lower than 1100 °C.

5. The method according to any of the preceding claims, **characterized in** selectively providing a powder material in which the lattice parameter of a gamma prime phase is larger than the lattice parameter of the gamma phase at least in a part of a temperature range from equal to or larger than 500°C to equal to or lower than 1000 °C.

6. The method according to any of the preceding claims, **characterized in** selectively providing a powder material in which the gamma prime phase comprises nickel and at least one of aluminum and titanium.

7. The method according to any of the preceding claims, **characterized in** selectively providing a powder material in which the gamma prime phase consists of nickel and at least one of aluminum and titanium.

8. The method according to any of the preceding claims, **characterized in** selectively providing a powder material in which the gamma prime phase comprises cobalt and at least one of tungsten and aluminum.

9. The method according to any of the preceding claims, **characterized in** selectively providing a powder material in which the gamma prime phase consists of cobalt and at least one of tungsten and aluminum.

Fig. 1

Fig. 2

EP 3 323 531 A1

Europäisches Patentamt
European Patent Office
Office européen des brevets

# EUROPEAN SEARCH REPORT

Application Number

EP 16 19 9699

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BI GUIJUN ET AL: "Microstructure and tensile properties of superalloy IN100 fabricated by micro-laser aided additive manufacturing", MATERIALS AND DESIGN, vol. 60, 15 April 2014 (2014-04-15), pages 401-408, XP029028804, ISSN: 0261-3069, DOI: 10.1016/J.MATDES.2014.04.020 * abstract * * page 405, right-hand column * * page 404, right-hand column * ----- | 1-9 | INV. B22F3/105 C22C1/04 |
| A | US 2008/185078 A1 (ISHIDA KIYOHITO [JP] ET AL) 7 August 2008 (2008-08-07) * paragraphs [0002], [0004] * ----- | 1-9 | |
| A | EP 2 383 356 A1 (GEN ELECTRIC [US]) 2 November 2011 (2011-11-02) * paragraphs [0005] - [0009], [0034], [0035] * ----- | 1-9 | |

TECHNICAL FIELDS SEARCHED (IPC)

B22F
C22C

The present search report has been drawn up for all claims

| Place of search | Date of completion of the search | Examiner |
|---|---|---|
| The Hague | 6 June 2017 | Forestier, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8

**EP 3 323 531 A1**

**ANNEX TO THE EUROPEAN SEARCH REPORT
ON EUROPEAN PATENT APPLICATION NO.** EP 16 19 9699

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2017

| Patent document cited in search report | Publication date | Patent family member(s) | Publication date |
|---|---|---|---|
| US 2008185078 A1 | 07-08-2008 | CA 2620606 A1 | 22-03-2007 |
| | | CN 101248198 A | 20-08-2008 |
| | | EP 1925683 A1 | 28-05-2008 |
| | | JP 4996468 B2 | 08-08-2012 |
| | | US 2008185078 A1 | 07-08-2008 |
| | | US 2014007995 A1 | 09-01-2014 |
| | | WO 2007032293 A1 | 22-03-2007 |
| EP 2383356 A1 | 02-11-2011 | CA 2737329 A1 | 29-10-2011 |
| | | CN 102234732 A | 09-11-2011 |
| | | EP 2383356 A1 | 02-11-2011 |
| | | JP 2011231403 A | 17-11-2011 |
| | | KR 20110120831 A | 04-11-2011 |
| | | US 2011268989 A1 | 03-11-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2754515 A

- US 20140034626 A

**Non-patent literature cited in the description**

- **Y. MISHIMA ; S. OCHIAI ; T. SUZUKI.** Lattice parameters of Ni($\gamma$), Ni3Al($\gamma$') and NI3Ga($\gamma$') solid solutions with additions of transition and B-subgroup elements. *Acta Metallurgica,* June 1985, vol. 33 (6), 1161-1169

- Materials for Advanced Power Engineering 1994. Proceedings of a Conference held in Liège, Belgium, 3-6 October 1994. Kluwer Academic Publishers, 1994, 877-880